# EUROPEAN PATENT APPLICATION

(11) **EP 3 785 535 A1**
(43) Date of publication of application: **03.03.2021**
(21) Application number: 18915894.2
(22) Date of filing: 24.04.2018
(51) Int. Cl.: A01K 61/00

(54) **COMPOSITION FOR USE IN THE HYGIENE, PREVENTION AND/OR TREATMENT OF COMMON INFECTIONS IN FISH FARMING**

(71) Applicant: LIPIDOS TOLEDO, S.A., 28037 Madrid (ES)
(72) Inventor: MARTINEZ SANCHEZ, Antonio, 28037 Madrid (ES); DIAZ CASTAÑEDA, José María, 28037 Madrid (ES)
(74) Representative: De Pablos Riba, Juan Ramon
(86) International application number: PCT/ES2018/000048
(87) International publication number: WO 2019/207174

(57) **Abstract**

A specifically formulated composition is described for use in the hygiene, prevention and treatment of frequent infections in aquaculture, which is administered by immersion and/or bath to different aquatic species farmed in aquaculture in order to prevent and treat bacterial and fungal diseases (such as those caused by *Vibrio* spp., *Flavobacterium* spp., *Saprolegnia* spp., and *Tenacibaculum* spp.), as well as to improve the hygiene in the farming of these species. The composition mainly consists of a combination of fatty acids and volatile organic acids, flavourings, stabilizers and surfactants with a detergent effect, and solvents.

## Description

### Technical Field of the Invention

The present invention is related to a composition for use in the hygiene, prevention and/or treatment of frequent infections in aquaculture, which is subject to be administered by immersion.

More particularly, the object of the present invention is focused on the development of a composition to be administered by immersion and/or bath to different aquatic species farmed in aquaculture with the purpose of preventing and/or treating bacterial and fungal dise ases (s u c has those caused by *Flavobacterium* spp., *Saprolegnia* spp., *Tenacibaculum* spp. and *Vibrio* spp.), as well as improving the hygiene in the farming of these species.

The invention essentially consists of a combination of fatty acids and volatile organic acids, flavourings, stabilizers and surfactants with a detergent effect, and solvents.

The field of application of the present invention is framed within the aquaculture sector, particularly focusing on the field of hygiene specific products and prophylaxis of the aquaculture crops.

### Background of the Invention

The increasing global demand of the aquatic species consumption over the last fifty years has caused a large increase in world production of these species in aquaculture facilities, as well as in the number of farmed species, which may include by way of example: carp (*Ctenopharyngodon idella, Hypophthalmichthys molitrix, Cyprinus carpio*), tilapia (*Oreochromis niloticus*), trout (*Oncorhynchus mykiss*), salmon (*Salmo salar, Oncorhynchus kisutch*), sea bream *(Sparus aurata),* perch (*Lates niloticus),* turbot (*Psetta maxima*), sea bass (*Dicentrarchus labrax*) and shrimp (*Litopenaeus vannamei, Litopenaeus monodon, Litopenaeus stylirostris).*

The production in the different types of facilities (reservoirs, ponds, floating cages...) tend to optimize the space through a high concentration of individuals in such facilities, which results in a close proximity to one another. This proximity increases the fish exposure to pathogenic organisms of both bacterial and fungal character, what causes diseases that lead to significant economic losses in the aquaculture sector at global level, since the losses caused by the infected fish mortalities should be added to the losses caused by the bad appearance of the infected individuals, which renders their marketing impossible.

Different substances such as malachite green, formalin, bronopol, oxytetracycline, florfenicol, chlorine dioxide, chloramine T, polyphenols... have been and are currently used for their treatment. All these products have toxic properties for fish, and many of them also have harmful effects to the environment. Therefore, their application is only appropriate in relation to therapeutic effects and with a withholding period between the application and the fish consumption. Moreover, most of them are only efficient for some diseases and species.

These issues, together with the need to have products with a lower environmental impact, with a wide spectrum and with a therapeutic and preventive use, have promoted the development of new preparations that enhance the well-known ones. The present invention can be found in the framework of these investigations, which is intended to especially provide the prevention and/or treatment of diseases caused by different frequent pathogens in aquaculture, and an improvement on farming in aquaculture.

### Description of the Invention

The present invention is related to a water-dispersible composition for use in aquaculture that essentially comprises fatty acids and volatile organic acids, flavourings, stabilizers and surfactants with a detergent effect, and solvents.

Preferably, the composition comprises a mixture of fatty acids and volatile organic acids at an amount between 3% to 45% of the total weight of the composition, and more preferably at an amount of approximately 15%.

The mixture of fatty acids and volatile organic acids comprises distillates of coconut and palm kernel oils and/or some of their components (caproic acid, caprylic acid, capric acid, and lauric acid and their sorbitol or glycerol esters) among the fatty acids, and formic, acetic, propionic, butyric and lactic acids and their salts (sodium, potassium and ammonium salts) among the volatile organic acids.

The flavouring mixture is present at a rate between 2% and 15% by weight, and more preferably it is approximately 5%.

The flavouring mixture is chosen from extracts and/or plant essential oils (thyme, red thyme, cinnamon, clove, oregano, lemon balm, and sage) and their main components (carvacrol, thymol, terpineol, and cinnamaldehyde).

The composition comprises between 32% and 50% of a mixture of stabilizers and surfactants with a detergent effect, preferably being of approximately 40%.

In order to prepare the stabilizers' and surfactants' mixture, at least three products from the ones included in the next group are chosen: glyceryl monostearate, polyoxyethylene castor oil, PEG-40 hydrogenated castor oil, xanthan gum, sodium alginate, polyethylene glycol 400, polyethylene glycol 1000, sorbitan monolaurate, sorbitan monooleate, monobutyrin, tributyrin, monolaurine, polysorbate 40, and polysorbate 80.

Solvents are present between 10% and 34% by weight, and more preferably at an amount of approximately 25% by weight. These solvents are chosen from a group consisting of ethanol, propylene glycol and water.

### Examples of the Composition of the Invention:

Three embodiment examples of the compositions according to the invention are described below, and they have shown particular advantages for treatments in aquaculture.

### Example 1

In a first embodiment example, the composition corresponds to the qualitative and quantitative formula that is provided below. The weights of each of the respective components are given for a total composition weight of 1 kg:

| | | |
|---|---|---|
| Formic acid | 95.00 | g |
| Sodium formate | 15.00 | g |
| Acetic acid | 20.00 | g |
| Caproic acid | 50.00 | g |
| Caprylic acid | 70.00 | g |
| Capric acid | 10.00 | g |
| Lauric acid | 50.00 | g |
| Red thyme extract | 5.00 | g |
| Cinnamon extract | 10.00 | g |
| Lemon balm essential oil | 10.00 | g |
| Oregano essential oil | 10.00 | g |
| Clove essential oil | 5.00 | g |
| Carvacrol | 10.00 | g |
| Cinnamaldehyde | 5.00 | g |
| PEG-40 hydrogenated castor oil | 120.00 | g |
| Glyceryl monostearate | 10.00 | g |
| Monolaurine | 30.00 | g |
| Xanthan gum | 5.00 | g |
| Polyethylene glicol 1000 | 40.00 | g |
| Sorbitan monolaurate | 30.00 | g |
| Polysorbate 40 | 50.00 | g |
| Polysorbate 80 | 125.00 | g |
| Propelyne glycol | 185.00 | g |
| Water | 40.00 | g |
| Total... | 1000.00 | g |

For the preparation of the composition of this embodiment example, each ingredient is weighed and they are all introduced in a mixer provided with agitation and a heating blanket. Once all the ingredients are introduced, the agitation is turned on and the mixture is heated to 45ºC during ten minutes.

### Example 2

In this embodiment example, the different components included in the composition according to the invention are used according to the respective amounts given below, for a total composition amount of 1kg:

| | | |
|---|---|---|
| Formic acid | 10.00 | g |
| Propionic acid | 95.00 | g |
| Ammonium propionate | 10.00 | g |
| Acetic acid | 25.00 | g |
| Coconut oil distillate | 140.00 | g |
| Caprylic acid | 15.00 | g |
| Capric acid | 5.00 | g |
| Thyme extract | 5.00 | g |
| Cinnamon extract | 5.00 | g |
| Oregano essential oil | 20.00 | g |
| Sage essential oil | 5.00 | g |
| Clove essential oil | 10.00 | g |
| Terpineol | 5.00 | g |
| Cinnamaldehyde | 15.00 | g |
| Polyoxyethylene castor oil 35 | 110.00 | g |
| Sodium alginate | 3.00 | g |
| Polyethylene glycol 400 | 50.00 | g |
| Sorbitan monolaurate | 10.00 | g |
| Sorbitan monooleate | 10.00 | g |
| Polysorbate 40 | 120.00 | g |
| Polysorbate 80 | 60.00 | g |
| Ethanol | 65.00 | g |
| Propylene glycol | 207.00 | g |
| Total | 1000.00 | g |

For the preparation of the composition of this embodiment example, each ingredient is weighed and they are all introduced in a mixer provided with agitation and a heating blanket. Once all the ingredients are introduced, the agitation is turned on and the mixture is heated to 45ºC during ten minutes.

### Example 3

In this embodiment example, the components included in the composition according to the invention are used according to the respective amounts given below for a composition of 1kg:

| | | |
|---|---|---|
| Formic acid | 5.00 | g |
| Propionic acid | 108.00 | g |
| Ammonium propionate | 4.00 | g |
| Acetic acid | 25.00 | g |
| Butyric acid | 3.00 | g |
| Caproic acid | 4.00 | g |
| Caprylic acid | 65.00 | g |
| Capric acid | 73.00 | g |
| Lauric acid | 8.00 | g |
| Red thyme extract | 2.00 | g |
| Cinnamon extract | 12.00 | g |
| Oregano extract | 10.00 | g |
| Sage essential oil | 2.00 | g |
| Clove essential oil | 8.00 | g |
| Carvacrol | 10.00 | g |
| Thymol | 1.00 | g |
| Cinnamaldehyde | 5.00 | g |
| Polyoxyethylene castor oil 35 | 160.00 | g |
| Glyceryl monostearate | 14.00 | g |
| Sodium alginate | 1.00 | g |
| Monobutyrin | 25.00 | g |
| Polyethylene glycol 400 | 50.00 | g |
| Sorbitan monooleate | 150.00 | g |
| Polysorbate 80 | 10.00 | g |
| Propylene glycol | 195.00 | g |
| Water | 50.00 | g |
| Total | 1000.00 | g |

For the preparation of the composition of this embodiment example, each ingredient is weighed and they are all introduced in a mixer provided with agitation and a heating blanket. Once all the ingredients are introduced, the agitation is turned on and the mixture is heated to 45ºC during ten minutes.

In addition, the present invention is related to the preventive and therapeutic use of the composition obtained to cope with different frequent bacterial and fungal diseases in aqua culture, such as those caused by *Vibrio* spp., *Flavobacterium* spp., *Saprolegnia* spp., and *Tenacibaculum* spp., as well as to its use in order to improve the hygiene in the farming of these species.

Additionally, it is related to the method of administration of the composition according to the invention through baths and/or immersion.

Different *in vitro* and *in vivo* assays have been conducted by the Faculty of Biology of the University of Santiago de Compostela (Spain) and ADL Diagnostic Chile SpA, among other laboratories, and have shown the effectiveness of the use of the composition of the invention in applications such as those mentioned above, since the results obtained suggest the invention can be used as an alternative measure to chemical biocides in order to prevent and treat the diseases caused by *Flavobacterium* spp, *Tenacibaculum* spp, *Vibrio* spp, and *Saprolegnia* spp.

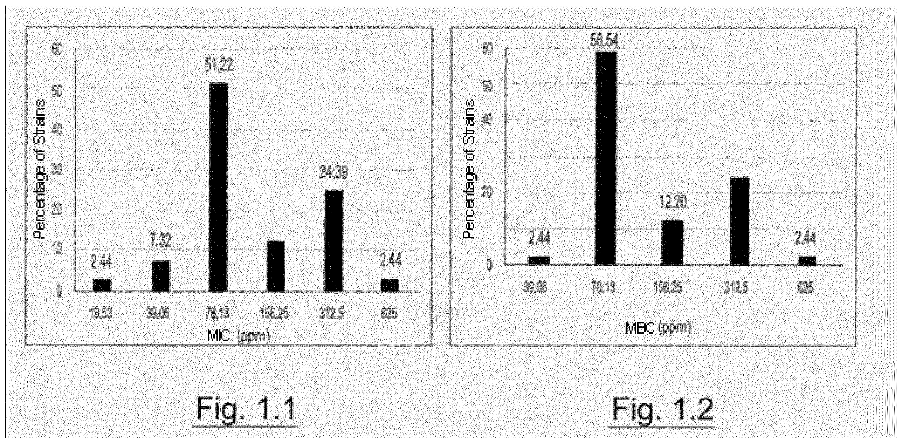

The tables below show, by way of example, some of the results obtained for the composition which is referred to as Liptosa-P203 for the tests. On the other hand, the Figures 1.1 and 1.2 provide a graphic representation of the value distribution of Minimum Inhibitory Concentration (MIC) and Minimum Bactericidal Concentration (MBC) of the Liptosa P-203 compound regarding a total of 41 tested strains.

**Table 1**

| **Minimum Inhibitory Concentration (MIC) and Minimum Bactericidal Concentration (MBC) of the Liptosa P-203 compound for *Flavobacterium psychrophilum*** | | |
|---|---|---|
| | | **Strains Tested N=41** |
| **MIC (ppm)** | Median | 205 |
| | Range | 19.53-625 |
| | MIC50 | 78.13 |
| | MIC90 | 312.5 |
| **MBC (ppm)** | Median | 242.2 |
| | Range | 39.06-625 |
| | MIC50 | 78.13 |
| | MIC90 | 312.5 |

**Table 2**

| Minimum Inhibitory Concentration (MIC) and Minimum Bactericidal Concentration (MBC) of the Liptosa-P203 compound for *F. psychrophilum* and *F. branchiophilum* | |
|---|---|
| Table 2 (Continuation) | |
| ***F. psychrophilum* (N = 41)** | **ppm** |
| Median | 205.0 |
| Range | 19.53 - 625.0 |
| MIC50 | 78.13 |
| MIC90 | 312.5 |
| Median | 242.2 |
| Range | 39.06 - 625 |
| MIC50 | 78.13 |
| MIC90 | 312.5 |

| ***F. branchiophilum* (N = 1)** | **ppm** |
|---|---|
| MIC | 312.5 |
| MBC | 312.5 |

**Table 3**

| MIC and MBC of the Liptosa-P203 product for the Saprolegnia spp. strains, determined by the broth dilution method | |
|---|---|
| **Sensitivity** | **Product (ppm)** |
| Median MIC | 175.7 |
| Range MIC | 156.1 - 312.5 |
| Median MBC | 175.7 |
| Range MBC | 156.1 - 312.5 |

**Table.4**

| MICROBIOLOGICAL WATER REPORT CASES PM-83310 and PM-83311 Results of freshwater microbiological count | | | | | | |
|---|---|---|---|---|---|---|
| Case no. | BATCH | Total Bacteria (cfu/ml) | Total Fungi (cfu/ml) | Total Saprolegnia (cfu/ml) | Total Flavobacteria (cfu/ml) | Total Aeromonas/ Pseudomonas (cfu/ml) |
| PM-83 310 | Before liptosa P-203 bath | 10.900 | <1 | <1 | 3.900 | 7.000 |
| PM-83 311 | After liptosa P-203 bath | 6.800 | <1 | <1 | 1.600 | 5.300 |
| % Efficiency | | 37.61 | ND | ND | 58.97 | 25.71 |

| | | | | | | |
|---|---|---|---|---|---|---|
| *cfu*/*ml: Colony-forming unit per millilitre* *<1: fungal development is not observed* | | | | | | |

**Table 5**

| **Evaluation of the effectiveness of the preventive treatment with Liptosa-P203 of saprolegniasis in rainbow trout** | | |
|---|---|---|
| **Experiment I** | | |
| **Treatment** | **Percentage of Mortality after Infection (M ± SD)** | **Percentage of Survival (M ± SD)** |
| Liptosa P-203 12 ppm | 20.3 ± 5.4 | 79.8 ± 5.4 |
| Control | 27.9 ± 2.9 | 72.1 ± 2.9 |

| **Experiment II** | | |
|---|---|---|
| Liptosa P-203 40 ppm | 91.6 ± 7.1 | 8.3 ± 7.1 |

| Table 5 (Continuation) | | |
|---|---|---|
| Liptosa P-203 30 ppm | 30.0 ± 4.7 | 70.0 ± 4.7 |
| Control | 45.0 ± 3.5 | 55.0 ± 3.5 |

| **Evaluation of the effectiveness of the curative treatment with Liptosa-P203 of saprolegniasis in rainbow trout** | | |
|---|---|---|
| **Treatment** | **Percentage of Mortality after Treatment (M ± SD)** | **Percentage of Survival (M ± SD)** |
| Liptosa P-203 30 ppm | 24.4 ± 17.9 | 75.6 ± 17.9 |
| Liptosa P-203 50 ppm | 100 | 0 |
| Control | 53.3 ± 16.3 | 46.6 ± 16.3 |

### Industrial Application

As described throughout the present patent application, the composition provided by the present invention finds particular application in the aquaculture sector, specifically for the hygiene, treatment and prevention of certain bacterial and fungal infections.

## Claims

1. Composition for use in the hygiene, prevention and/or treatment of frequent infections in aquaculture, of a water-dispersible nature, **characterized in that** it comprises a combination of fatty acids and their esters, volatile organic acids and their salts, flavourings, stabilizers and surfactants with a detergent effect, and solvents.

2. Composition for use in the hygiene, prevention and/or treatment of frequent infections in aquaculture according to claim 1, **characterized in that** the fatty acids and their esters consist of different distillates of coconut and palm kernel oils and/or some of their components (caproic acid, caprylic acid and lauric acid, and their sorbitol or glycerol esters).

3. Composition for use in the hygiene, prevention and/or treatment of frequent infections in aquaculture according to claims 1 and 2, **characterized in that** the medium chain fatty acids and their esters are found at a rate between 3% and 45% by weight, preferably being a rate of approximately 15% by weight.

4. Composition for use in the hygiene, prevention and/or treatment of frequent infections in aquaculture according to claim 1, **characterized in that** the volatile organic acids and their salts are chosen from one or more of the group comprising formic acid, propionic acid, acetic acid, butyric acid and lactic acid, and the most used salts are the sodium, potassium and ammonium ones.

5. Composition for use in the hygiene, prevention and/or treatment of frequent infections in aquaculture according to claims 1 and 4, **characterized in that** the volatile organic acids and their salts are found at a rate between 0% and 25% by weight, preferably being a rate of approximately 15%.

6. Composition for use in the hygiene, prevention and/or treatment of frequent infections in aquaculture according to claim 1, **characterized in that** the flavourings are chosen from one or more extracts and/or plant essential oils (thyme, red thyme, cinnamon, clove, oregano, lemon balm, and sage) and their main components (carvacrol, thymol, terpineol and cinnamaldehyde).

7. Composition for use in the hygiene, prevention and/or treatment of frequent infections in aquaculture according to claims 1 and 6, **characterized in that** the flavourings are found at a concentration between 2% and 15% by weight, preferably being a concentration of 5% by weight.

8. Composition for use in the hygiene, prevention and/or treatment of frequent infections in aquaculture according to claim 1, **characterized in that** the mixture of stabilizers and surfactants with a detergent effect at least comprises three products among glyceryl monostearate, polyoxyethylene castor oil, PEG-40 hydrogenated castor oil, xanthan gum, sodium alginate, polyethylene glycol 400, polyethylene glycol 1000, monobutyrin, tributyrin, monolaurine, sorbitan monolaurate, sorbitan monooleate, polysorbate 40, and polysorbate 80.

9. Composition for use in the hygiene, prevention and/or treatment of frequent infections in aquaculture according to claims 1 and 8, **characterized in that** the stabilizers and surfactants with a detergent effect are found at a concentration between 32% and 50% by weight, preferably being a concentration of approximately 40% by weight.

10. Composition for use in the hygiene, prevention and/or treatment of frequent infections in aquaculture according to claim 1, **characterized in that** the solvents are chosen from one or more of the group comprising water, ethanol and propylene glycol.

11. Composition for use in the hygiene, prevention and/or treatment of frequent infections in aquaculture according to claims 1 and 10, **characterized in that** the solvents are present between 10% and 34% by weight, preferably being a concentration of approximately 25% by weight.

12. Composition use according to claims 1 to 11 for the care and hygiene, through baths and/or immersion, of farmed species in aquaculture.

13. Composition use according to claims 1 to 11 as a therapeutic agent in the treatment through baths and/or immersion of fungal diseases caused by *Saprolegnia* spp.

14. Composition use according to claims 1 to 11 as a therapeutic agent in the treatment through baths and/or immersion of bacterial diseases caused by *Flavobacterium* spp.

15. Composition use according to claims 1 to 11 as a therapeutic agent in the treatment through baths and/or immersion of bacterial diseases caused by *Tenacibaculum* spp.

16. Composition use according to claims 1 to 11 as a therapeutic agent in the treatment through baths and/or immersion of bacterial diseases caused by *Vibrio* spp.

17. Composition use according to claims 1 to 11 in the control/prevention through baths and/or immersion of fungal diseases caused by *Saprolegnia* spp.

18. Composition use according to claims 1 to 11 in the control/prevention through baths and/or immersion of bacterial diseases caused by *Flavobacterium* spp.

19. Composition use according to claims 1 to 11 in the control/prevention through baths and/or immersion of bacterial diseases caused by *Tenacibaculumspp.*

20. Composition use according to claims 1 to 11 in the control/prevention through baths and/or immersion of bacterial diseases.
